Europäisches Patentamt

European Patent Office

Office européen des brevets

(11) Veröffentlichungsnummer: **0 421 245 A2**

(12) **EUROPÄISCHE PATENTANMELDUNG**

(21) Anmeldenummer: 90118418.4

(51) Int. Cl.5: **H02M 3/335**

(22) Anmeldetag: **25.09.90**

(30) Priorität: **06.10.89 DE 3933509**

(43) Veröffentlichungstag der Anmeldung:
**10.04.91 Patentblatt 91/15**

(84) Benannte Vertragsstaaten:
**DE ES FR GB IT**

(71) Anmelder: **Siemens Aktiengesellschaft**
**Wittelsbacherplatz 2**
**W-8000 München 2(DE)**

(72) Erfinder: **Bohn, Josef**
**Hauptstrasse 101**
**W-7831 Rheinhausen(DE)**
Erfinder: **Lang, Bernhard**
**Paula-Modersohn-Strasse 8**
**W-7500 Karlsruhe 41(DE)**

(54) **Gleichspannungswandler.**

(57) Der Schalttransistor (TS) eines Gleichspannungswandlers ist von einer bistabilen Kippstufe (FF1) gesteuert, die von Taktimpulsen gesetzt und von einem ersten Komparator (K1) rückgesetzt wird, wenn der Strom durch den Schalttransistor (TS) ein der Differenz zwischen der Ausgangsspannung ($U_A$) des Wandlers und einer ersten Reerenzspannung ($U_{R1}$) entsprechendes Signal übersteigt. Einem zweiten Komparator (K2) ist ebenfalls ein den Strom durch den Schalttransistor (TS) entsprechendes Signal und andererseits ein Referenzsignal ($U_{R1}$) zugeführt. Ubersteigt der Strom durch den Schalttransistor (TS) einen vorgegebenen Wert, werden die Taktimpulse auf eine niedrigere Frequenz umgeschaltet.

Die Erfindung wird angewandt bei Schaltnetzteilen.

# GLEICHSPANNUNGSWANDLER

Die Erfindung betrifft einen Gleichspannungswandler mit einem zyklisch betätigten elektronischen Schalter gemäß dem Oberbegriff des Anspruchs 1.

In der Druckschrift "Modelling and Analysis of Switching DC-to-DC Converters in Constant-Frequency Current-Programmed Mode", IEEE Power Electronics Specialists Conference, June 18 - 22, 1979, Seiten 169 bis 186 sind schaltende Gleichspannungswandler gemäß dem Oberbegriff des Anspruchs 1 eingehend behandelt. Die Anwendung von Gleichspannungswandlern als Schaltnetzteile ist in den Zeitschriften "Elektronik" 4/1969, Seiten 57 bis 64 und Siemens Components 26 (1988), Heft 6, Seiten 260 bis 264 sowie in der Firmen-Druckschrift "Applications Note U-100A" der Firma UNITRODE INTEGRATED CIRCUITS, Seiten 9-105 und 9-106 beschrieben. Dort ist auch angegeben, die Eingangsspannung auf Über- und Unterspannung zu überwachen und das Schaltnetzteil abzuschalten, wenn die Eingangsspannung einen unteren Wert unterschreitet oder einen oberen Wert überschreitet. Der Ausgangsstrom solcher Gleichspannungswandler ist durch das Puls-/Pausen-Verhältnis der Ansteuerimpulse des elektronischen Schalters bestimmt. Zu dessen Schutz kann das Puls-/Pausen-Verhältnis begrenzt sein, so daß auch der Maximalstrom einen Grenzwert nicht überschreitet. Dieser muß aber z. B. um bis 20 % höher als der Nennstrom eingestellt werden. Wenn auch die Schaltung so ausgelegt werden kann, daß sie bei diesem Strom auch auf Dauer nicht beschädigt wird, ist es doch von Nachteil, daß die unnötig verbrauchte Energie über ein vorgeschaltetes Netzteil übertragen und die Verlustwärme abgeführt werden muß.

Aus der DE-OS 36 01 659 ist ein elektronischer Schalter mit einer Sicherung gegen Kurzschluß im Ausgangskreis bekannt. Im Kurzschlußfalle wird der Schalter mittels Prüfimpulsen mit kleinem Puls-/Pausen-Verhältnis zyklisch geschlossen. Damit wird geprüft, ob der Kurzschluß noch besteht. Ist dies der Fall, öffnet die Überlastsicherung wieder den Schalter, andernfalls bleibt der Schalter nach dem Prüfimpuls geschlossen.

Der vorliegenden Erfindung liegt die Aufgabe zugrunde, einen Gleichspannungswandler zu schaffen, der als Schaltnetzteil verwendbar ist und dessen Ausgangsstrom bei Kurzschluß wesentlich kleiner als der Nennstrom ist und der sich nach Aufheben des Kurzschlusses wieder in den normalen Betrieb schaltet.

Erfindungsgemäß wird diese Aufgabe mit den im kennzeichnenden Teil des Anspruchs 1 angegebenen Maßnahmen gelöst.

Während die bekannten Gleichspannungswandler mit in etwa unveränderlicher Taktfrequenz arbeiten, wird bei dem neuen Gleichspannungswandler im Kurzschlußfall die Taktfrequenz herabgesetzt. Durch das Herabsetzen der Taktfrequenz das Puls-/Pausen-Verhältnis und damit der mittlere Ausgangsstrom verringert.

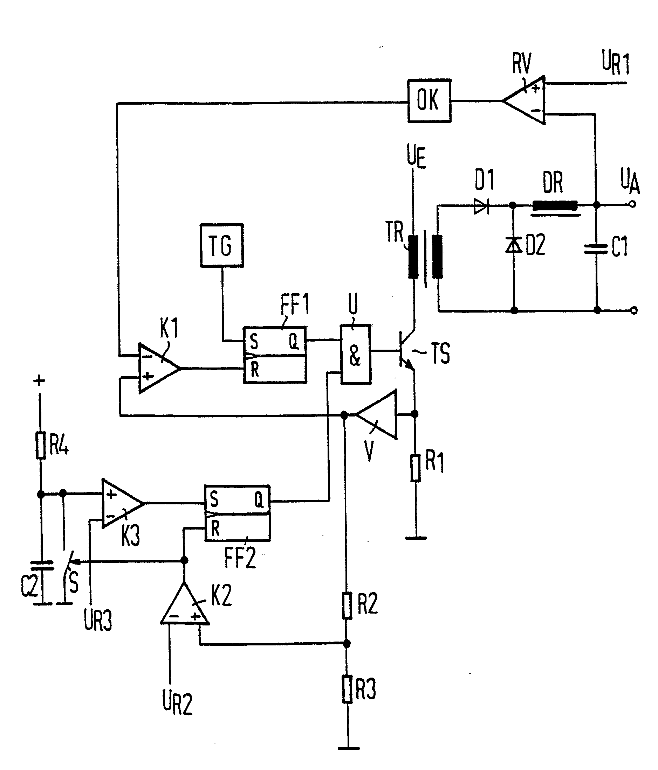

Anhand der Zeichnung, in der das Prinzipschaltbild eines Ausführungsbeispiels der Erfindung dargestellt ist, werden im folgenden die Erfindung sowie Weiterbildungen und Ergänzungen näher beschrieben und erläutert.

Eine Eingangsspannung $U_E$, die der Primärwicklung eines Übertragers TR zugeführt ist, soll in eine Ausgangsgleichspannung $U_A$ umgewandelt werden. In Reihe zur Primärwicklung des Übertragers TR liegt ein zyklisch geschalteter Schalttransistor TS und ein Strommeßwiderstand R1. Die durch zyklisches Schalten des Schalttransistors TS erzeugte Wechselspannung wird auf der Sekundärseite des Übertragers TR mit einer Diode D gleichgerichtet und mittels einer Drossel DR und eines Kondensators C1 sowie einer Freilaufdiode D2 gesiebt. Die entstehende Ausgangsspannung $U_A$ wird von einem Regelverstärker RV mit einer ersten Referenzspannung $U_{R1}$ verglichen.

Die Regelabweichung wird dem einen Eingang eines ersten Komparators K1 zugeführt, dessen anderen Eingang eine Spannung zugeführt ist, die dem Momentanwert des Stromes durch den Schalttransistor TS entspricht. Eine diesem Strom proportionale Spannung tritt an dem Strommeßwiderstand R1 auf, die zur Verbesserung der Regelgenauigkeit in einem Verstärker V verstärkt dem ersten Komparator K1 zugeführt wird. Zwecks galvanischer Entkopplung der Ausgangsspannung $U_A$ von der Eingangsspannung $U_E$ sind die Primär- und die Sekundärwicklung des Übertragers TR als getrennte Wicklungen ausgeführt und zwischen den Regelverstärker RV und den Komparator K1 ist ein Opto-Koppler OK geschaltet.

Im normalen Betrieb ist ein dem Transistor TS vorgeschaltetes UND-Glied U von einer bistabilen Kippstufe FF2 stets freigegeben, so daß der Transistor TS in Abhängigkeit des Schaltzustandes einer bistabilen Kippstufe FF1 geschaltet wird. Diese wird mit den Impulsen eines Taktgebers TG gesetzt. Im gesetzten Zustand steuert sie den Transistor TS in den leitenden Zustand, so daß durch diesen wegen der induktiven Belastung ein ansteigender Strom fließt. Am Strommeßwiderstand R1 und am Ausgang des Verstärkers V treten Spannungen mit zum Stromverlauf proportionalem Verlauf auf. Erreicht die Spannung am Ausgang des Verstärkers V die Ausgangsspannung des Opto-Kopplers OK, setzt der Komparator K1 die bistabile Kippstufe FF1 zurück, und der Transistor TS wird bis zum nächsten Impuls des Taktgebers TG in den sperrenden Zustand gesteuert. Sinkt infolge von stärkerer Belastung die Ausgangsspannung UA, steigt die Regeldifferenz und damit die Spannung am invertierenden Eingang des Komparators K1. Die Ausgangsspannung des Verstärkers V braucht dann länger, bis sie diese Spannung erreicht, so daß die bistabile Kippstufe FF1 später zurückgeschaltet und das Puls-/Pausen-Verhältnis der Ansteuerimpulse des Transistors TS vergrößert wird. Dieser zieht daher sowohl einen der höheren Belastung entsprechenden größeren mittleren Strom, als auch einen größeren Spitzenstrom. Im Falle einer Überlast wird das maximale Puls-/Pausen-Verhältnis erreicht, das zweckmäßig so begrenzt wird, daß der Transistor TS und auch die anderen Schaltungsteile nicht zerstört werden.

Die bisher beschriebene Schaltung hat den Nachteil, daß bei Überlast ständig ein hoher Strom fließt, der zwar die Schaltung nicht gefährdet, aber doch unnötig Energie verbraucht. Um den Strom im Überlastfalle herabzusetzen, ist die Ausgangsspannung des Verstärkers V über einen Spannungsteiler R2, R3 dem einen Eingang eines Komparators K2 zugeführt, dessen anderer Eingang an eine Referenzspannung $U_{R2}$ angeschlossen ist. Der Spannungsteiler R2, R3 und die zweite Referenzspannung $U_{R2}$ sind so gewählt, daß die Spannung am Widerstand R3 die Referenzspannung $U_{R2}$ übersteigt, wenn der Strom durch den Transistor TS den Maximalwert erreicht. Der dann erfolgende Signalwechsel am Ausgang des Komparators K2 setzt die bistabile Kippstufe FF2 zurück, so daß an deren Ausgang Q "0"-Signal erscheint und das UND-Glied U das Ausgangssignal der Kippstufe FF1 sperrt. Gleichzeitig wird ein Schalter S geschlossen, der parallel zu einem Kondensator C2 liegt und diesen entlädt. Mit dem Sperren des UND-Gliedes U wird auch der Transistor TS gesperrt, so daß die Spannung am Widerstand R3 Null wird und das Ausgangssignal des Komparators K2 den Schalter 5 wieder öffnet. Der Schaltzustand der Kippstufe FF2 wird durch diesen Signalwechsel am Ausgang des Komparators K2 nicht geändert, so daß der Transistor TS unabhängig vom Schaltzustand der ersten Kippstufe FF1 gesperrt bleibt. Der entladene Kondensator C2 wird über einen Widerstand R4, der als Konstantstromquelle dient, langsam aufgeladen, so daß er nach einer Zeit, die ein Mehrfaches der Periodendauer des Taktgenerators TG beträgt, eine dritte Referenzspannung UR3 übersteigt. Damit wechselt ein dritter Komparator K3 sein Ausgangssignal und setzt die Kippstufe FF2. Da zwischenzeitlich die Kippstufe FF1 vom ·Taktgeber TG gesetzt wurde, ist die UNDBedingung an den Eingängen des UND-Gliedes U erfüllt, und der Transistor TS wird in den leitenden Zustand gesteuert. Besteht noch die Überlast, steigt der Strom bis zu dem mit dem Spannungsteiler R2, R3 und der Referenzspannuing $U_{R2}$ eingestellten Maximalstrom an, die Kippstufe FF2 wird wieder zurückgesetzt und der Transistor TS über das UND-Glied U gesperrt. Da die Dauer der dem Transistor TS in den leitenden Zustand steuernden Impulse im Kurzschlußfalle nicht größer ist, als wenn die Schaltung mit der nur wenig unterhalb der Maximallast liegenden Nennlast betrieben wird, die Impulsfrequenz um ein Mehrfaches niedriger ist, ist das Puls-/Pausen-Verhältnis und damit der durch den Transistor TS fließende Strom im Kurzschlußfalle wesentlich kleiner als bei Nennlast. Mit steigender Last steigt daher der Strom an, bis der Maximalstrom erreicht ist und sinkt dann auf einen kleinen mittleren Prüfstrom ab. Dieser ist kein Gleichstrom mehr, sondern besteht aus kurzen Stromimpulsen. Ist die Überlast beseitigt, geht die Schaltung in den Normalbetrieb über.

Das Ausführungsbeispiel kann mannigfach im Rahmen der Erfindung abgeändert werden. So kann der Schaltungsteil mit dem Schalter 5, dem Kondensator C2, dem Widerstand R4 und dem Komparator K3 durch einen Oszillator ersetzt werden, dessen Frequenz wesentlich niedriger als die des Taktgebers TG ist. Auch können die Kippstufen FF1, FF2 zu einer Kippstufe zusammengefaßt werden, die im Normalbetrieb der Schaltung von einem Taktgeber höherer Frequenz gesetzt wird und im Kurzschlußfalle von einem Taktgeber niederer Frequenz. Anstatt der beiden Taktgeber kann auch ein Taktgeber mit umschaltbarer Frequenz eingesetzt werden.

## Ansprüche

1. Gleichspannungswandler mit einem elektronischen Schalter, der zyklisch von Impulsen gesteuert geschlossen wird, deren Beginn von Taktimpulsen bestimmt ist und die beendet werden, wenn ein zum Strom durch den elektronischen Schalter proportionales Signal ein der Differenz zwischen dem Ausgangssignal des Wandlers und einer Referenzspannung entsprechendes Signal übersteigt, **dadurch gekennzeichnet,** daß die Frequenz der Taktimpulse erniedrigt wird, wenn der Strom durch den elektronischen Schalter (TS) einen vorgegebenen Maximalwert übersteigt.

2. Gleichspannungswandler nach Anspruch 1, **dadurch gekennzeichnet,** daß der elektronische Schalter (TS) von einer bistabilen Kippstufe (FF1) gesteuert ist, deren Setzeingang (S) an einen Taktgeber (TG) und deren Rücksetzeingang (R) an einen Komparator (K1) angeschlossen ist, dem einerseits das der Differenz zwischen dem Ausgangssignal ($U_A$) des Wandlers und der Referenzspannung ($U_{R1}$) entsprechende Signal und andererseits das dem Strom durch den elektronischen Schalter (TS) entsprechende Signal zugeführt ist.

3. Gleichspannungswandler nach Anspruch 2, **dadurch gekennzeichnet,** daß die Frequenz des Taktgebers auf eine niedrigere Frequenz umgeschaltet wird, wenn der Strom durch den elektronischen Schalter ·(TS) den vorgegebenen Maximalwert übersteigt.

4. Gleichspannungswandler nach Anspruch 2, **dadurch gekennzeichnet,** daß zwischen dem Ausgang der bistabilen Kippstufe (FF1) und den Steuereingang des elektronischen Schalters (TS) eine Torschaltung (U) liegt, die von einer zweiten bistabilen Kippstufe (FF2) gesteuert ist, deren Setzeingang (S) an einen Takt- oder Zeitgeber mit längerer Periodendauer als die des ersten Taktgebers (TG) angeschlossen ist und deren Rücksetzeingang (R) an einen zweiten Komparator (K2) angeschlossen ist, dem einerseits ein zweites, dem Strom durch den elektronischen Schalter (TS) entsprechendes Signal und andererseits eine Referenzspannung ($U_{R2}$) zugeführt sind, die so gewählt sind, daß das dem Strom durch den elektronischen Schalter entsprechende Signal die Referenzspannung ($U_{R2}$) übersteigt, wenn der vorgegebene Maximalstrom durch den elektronischen Schalter (TS) überschritten ist.

5. Gleichspannungswandler nach Anspruch 4, **durch gekennzeichnet,** daß der Zeitgeber einen Kondensator (C2) enthält, der entladen wird, wenn der Strom durch den elektronischen Schalter (TS) den vorgegebenen Maximalwert übersteigt und der dann wieder aufgeladen wird und daß bei Erreichen einer vorgegebenen Kondensatorladung die zweite bistabile Kippstufe (FF2) gesetzt und die Torschaltung freigegeben wird.